# EUROPEAN PATENT SPECIFICATION

(11) **EP 1 117 500 B1**
(45) Date of publication and mention of the grant of the patent: **22.05.2002**
(21) Application number: 98946198.3
(22) Date of filing: 30.09.1998
(51) Int. Cl.: B22F 9/04, B22F 1/00, C22C 1/04

(54) **PREPARATION OF NANOCRYSTALLINE ALLOYS BY MECHANICAL ALLOYING CARRIED OUT AT ELEVATED TEMPERATURES**
HERSTELLUNG VON NANOKRISTALLINEN LEGIERUNGEN DURCH MECHANISCHES LEGIEREN BEI ERHÖHTEN TEMPERATUREN
PREPARATION D'ALLIAGES NANOCRISTALLINS PAR BROYAGE MECANIQUE A TEMPERATURES ELEVEES

(43) Date of publication of application: 25.07.2001
(73) Proprietor: Hydro-Quebec Corporation, Montreal, Quebec H2Z 1A4 (CA)
(72) Inventor: SCHULZ, Robert, Sainte-Julie, Québec J0L 2S0 (CA); RIOUX, Reynald, Boucherville, Québec J4B 1J4 (CA); BOILY, Sabin, Chambly, Québec J3L 5M6 (CA); HUOT, Jacques, Boucherville Québec J4B 6H6 (CA)
(74) Representative: Leszczynski, André
(86) International application number: CA9800939
(87) International publication number: WO0018530

(56) References cited:
- EP-A- 0 671 357
- WO-A-92/19401
- WO-A-96/23906
- US-A- 4 761 263
- US-A- 4 909 840
- US-A- 5 149 381
- ZALUSKI L ET ALL: "EFFECTS OF RELAXATION ON HYDROGEN ABSORPTION IN FE-TI PRODUCED BY BALL MILLING." JOURNAL OF ALLOYS AND COMPOUNDS , vol. 227, no. 1, 15 August 1995, pages 53-57, XP002102737 cited in the application
- ZALUSKI L ET AL: "HYDROGEN ABSORPTION IN NANOCRYSTALLINE MG2NI FORMED BY MECHANICAL ALLOYING" JOURNAL OF ALLOYS AND COMPOUNDS, 1 February 1995, pages 245-249, XP000570377

## Description

### BACKGROUND OF THE INVENTION

### a) field of the invention

The present invention relates to an improved process for preparing a nanocrystalline powder of an alloy made of at least two metals.

More particularly, it relates to an improved process wherein the nanocrystalline powder is obtained by subjecting a mixture of metal powders to an intensive mechanical grinding carried out in a high energy, ball milling machine or any similar piece of equipment.

The term "nanocrystalline" as used herein designates any kind of powder consisting of crystallites having a grain size lower than 100 nm.

### b) brief description of the prior art

The preparation of alloys by intensive metal grinding (or milling) of a mixture of metal powders is a well known technique.

Recently, this technique which is also called "mechanical alloying", has been found particularly efficient for the preparation of hydrogen absorbing alloys like FeTi, LaNi₅ and Mg₂Ni, which are in the form of crystallites and can form hydrides reversibly and thus be used for storing hydrogen.

It has also been found that hydrogen absorbing alloys of very high efficiency are obtained if the mechanical grinding is carried out in such a manner as to reduce the size of the crystallites that are formed to a few nanometers. Indeed, with such nanocrystalline alloys, it becomes possible to store hydrogen very rapidly and without requiring long activation treatment as is necessary when use is made of the same alloys in a conventional polycrystalline form.

In EP-A-671,357 (corresponding to U.S. patent application serial No. 08/387,457 filed on February 13, 1995), there is disclosed a process for the preparation of a nanocrystalline powder of an alloy of the formula Mg₂₋ₓ Ni ₁₊ₓ wherein x ranges between -0.3 and +0.3, which consists in grinding at ambient temperature and atmospheric pressure under an inert atmosphere, a Mg powder with a Ni powder in such amounts as to obtain the requested alloy. In order to obtain the requested crystallites of the formula Mg₂₋ₓ N₁₊ₓ and to reduce their grain size to less than 100 nm, it is compulsory to grind the metal powders for at least 50 hours (in the diffraction spectra shown in Fig. 3 of this U.S. patent application serial No. 08/387,457 one can see that the requested alloy starts being formed after 26 hours and its full synthesis and the reduction of its crystalline size to less than 30 nm are completed after 66 hours).

In international laid-open patent application No. WO 96/23906 (corresponding to U.S. patent application serial No. 08/382,776 filed on February 2, 1996), there is disclosed a process for the preparation of a material of the formula:

(M₁₋ₓAₓ) D_{y}

wherein:
M is Mg, Be or a combination thereof;
A is at least one element selected from the group consisting of Li, Ca, Ti, V, Cr, Mn, Fe, Co, Ni, Cu, Zn, Al, Y, Zr, Nb, Mo, In, Sn, O, Si, B, C and F (preferably Zr, Ti and Ni);
D is a hydrogen dissociation catalyst selected from the group consisting of Fe, Co, Ni, Ru, Rh, Pd, Ir and Pt (preferably Pd);
x is a number (atomic fraction) ranging from 0 to 0.3; and
y is a number (atomic fraction) ranging from 0 to 0.15 (preferably from 0 to 0.02).

This material is of a very light-weight and is capable of reversibly storing hydrogen with very good kinetics. It consists of a powder of particles of the formula M₁₋ₓAₓ having an average size ranging from 0.1 to 100 µm. Each particle may consist of nanocrystalline grains having an average size of 3 to 100 nm. Alternatively, each particle may have a nano-layered structure with a layer spacing of 3 to 100 nm. Some of the particles have clusters of at least one of the metals D attached thereof, each cluster having an average size ranging from 2 to 200 nm.

The process used for preparing this material basically consists in intensely grinding a powder of the metal M until the grain size of the crystallites reaches the requested value, or intensely grinding a mixture of a powder of metal M with a powder of the other metal A in a steel or tungsten carbide crucible of a high energy ball mill. Once again, such grinding is carried out at ambient temperature under an inert atmosphere at atmospheric pressure. It must also be carried out for an extensive period of time so as to obtain the requested particles of formula M₁₋ₓAₓ and to reduce their grain size to the requested value. Once this grinding step is completed, a given amount of the hydrogen dissociation catalyst D can be added to the particles and the resulting mixture is subjected to an additional grinding step to apply clusters of the catalyst D onto the particles M₁₋ₓAₓ.

In the article of L. ZALUSKI et al entitled *"Effects of relaxation on hydrogen absorption in Fe-Ti produced by ball-milling*", Journal of Alloys and Compounds, 227 (1995) 53-57, there is disclosed a process for the preparation of a nanocrystalline powder of a FeTi alloy, which consists of grinding at ambient temperature under an inert atmosphere a mixture of elemental Fe and Ti powders in a high-energy ball milling machine.

This article also discloses that a large amount of energy can be stored in the nanocrystalline FeTi fabricated by high energy ball-milling, as a result of mechanical deformation. Such leads to a high concentration of structural defects (high level of internal strain) and to chemical disorders.

This article further discloses that after having been prepared, the alloy can be subjected to a relaxation treatment which consists of annealing the alloy at a temperature of 400°C in order to reduce its internal strain to at least 40% of the initial value. Surprisingly, such annealing does not change the size of the crystallines. Moreover, annealing gives rise to the appearance of a well-defined plateau in the pressure-composition isotherm of hydrogen adsorption of the alloy at room temperature.

In all cases, the preparation of nanocrystalline alloys by mechanical alloying calls for the mechanical grinding to be carried out for a substantial amount of time, which is generally higher than 50 hours and can be as high as 120 hours.

### SUMMARY OF THE INVENTION

It has now been discovered that even when the intensive mechanical grinding is carried out at an elevated temperature, one may still obtain a nanocrystalline alloy.

It has also been discovered that, in such a case, the amount of time required to prepare nanocrystalline alloys by intensive mechanical grinding can substantially be reduced. As a matter of fact, when the grinding is carried out at an elevated temperature ranging from about 100°C to about 400°C instead of being carried out at ambient temperature, one may prepare a nanocrystalline alloy powder within a few hours instead of a few ten hours.

Of course, such a reduction in time results in a reduction in the preparation cost, as the amount of energy required for simultaneously grinding and heating the powders for a short period of time is usually smaller than the amount of energy required for operating the ball-milling machine at ambient temperature for a very long period of time.

It has further been discovered that when the grinding step is carried out at an elevated temperature, some structural defects (holes, dislocations, internal strain) are "automatically" avoided, thereby making it possible to obtain nanocrystalline powders of hydrogen adsorbing alloys like Mg₂Ni or FeTi, without having to subject the same to a subsequent annealing.

As a matter of fact, it has been found that when the grinding step is carried out at 100 to 400°C, interdiffusion of the elements of the powder mixture processed within the crucible of the ball milling machine is improved, thereby resulting in a substantial reduction of time in the preparation process, and in the obtention of alloys having less intrinsic defects.

The preparation of a nanocrystalline alloy by intensive mechanical grinding of a mixture of metal powders at elevated temperature should not be confused with the conventional induction melting processes used for preparing alloys, or with the conventional sintering process well known in the metallurgical art. Thus, by way of example, Li J. et al in Advanced Materials, vol. 5, No. 7/8, July 1993, pp. 554-555, disclose an induction melting process consisting in heating constituent metals to 850°C-900°C under an inert atmosphere, cooling them to the room temperature and pulverizing them into particles of 25 to 100 mesh. This process and the range of operating temperatures are completely different from those mentioned hereinabove and the resulting alloy is not of nanocrystalline structure.

In the same article of Li et al, there is also disclosed a process for the production of a Mg2Ni alloy using a powder metallurgy technique, which comprising mixing Mg and Ni powder in appropriate proportions, shaping the mixed powders in an isobaric press, subjecting the shaped mixture to sintering at 300 to 600°C for 1 to 10 hours in a tube furnace; and letting it cool to room temperature under argon. In this sintering process, there is no mechanical grinding and the particles of alloy that are obtained are not of nanocrystalline structure.

Thus, the present invention as claimed hereinafter is directed to an improved process for preparing a nanocrystalline powder of an alloy made of at least two metals, which process is the type comprising the step of subjecting to an intestive mechanical grinding a mixture of powders of these metals in such amounts as to obtain the requested alloy. As usual, such intensive metal grinding must be carried out under atmospheric pressure in an inert atmosphere and for a period of time sufficient to achieve formation of the crystallites and reduction of the grain size of the crystallites to the requested value.

In accordance with the invention, this process is characterized in that the intensive mechanical grinding is carried out at an elevated temperature ranging from about 100°C to about 400°C and preferably from 150°C to 300°C, whereby a substantial reduction of the above mentioned period of time by about one order of magnitude is achieved when compared to a mechanical grinding step carried out at ambient temperature.

The invention and its advantages will be better understood upon reading the following non-restrictive detailed description thereof, made with reference to the accompanying drawings.

### BRIEF DESCRIPTION OF THE DRAWINGS

Fig. 1 is a schematic representation of the alloying process that takes place when a mixture of metal powders is subjected to intensive mechanical grinding at elevated temperature;
Fig. 2 is a representation of the X-ray diffraction spectra of a mixture of Mg and Ni in a mole ratio of 2:1, while the same was subjected to intensive mechanical grinding at room temperature, the spectra having been taken at intervals of 15, 60, 120 and 150 hours;
Fig. 3 is a curve showing the hydrogen absorption rate at 12 bars and 300°C of a nanocrystalline Mg₂Ni alloy prepared by intensive mechanical grinding for 150 hours at room temperature, after one absorption;
Fig. 4 is a representation of the X-ray diffraction spectrum of a mixture of Mg and Ni in a mole ratio of 2:1, taken after 5 hours of intensive mechanical grinding at about 290°C;
Fig. 5 is a curve similar to the one of Fig. 3 showing the hydrogen absorption rate at 12 bars and 300°C of a nanocrystalline Mg2Ni alloy prepared by intensive mechanical grinding for 8 hours at about 200°C, after three absorptions;
Fig. 6 is a curve similar to the one of Fig. 5, showing the hydrogen absorption rate at 12 bars and 200°C of the same alloy after four absorption; and
Fig. 7 is a curve showing the pressure-composition isotherm at 300°C of the alloy used for the tests reported in Figs. 5 and 6.

### DETAILED DESCRIPTION OF THE INVENTION

As aforesaid, the process according to the invention is intended to be used for preparing a nanocrystalline powder of an alloy made of at least two metals. By "nanocrystalline" powder, there is meant a powder consisting of crystallites having a grain size lower than 100 nm.

The process is of the "mechanical alloying" type and comprises the step of subjecting to an intensive mechanical grinding powders of different metals in such amounts as to obtain the requested alloy.

As is conventional, the intensive metal grinding is carried out at atmospheric pressure under an inert atmosphere for a period of time sufficient to achieve formation of the crystallites and reduction of the grain size of these crystallites to the requested value.

In accordance with the invention, the intensive mechanical grinding is carried out at an elevated temperature ranging from about 100°C to about 400°C, instead of being carried out at ambient temperature. Such results in a substantial reduction of time in the preparation of the nanocrystalline alloy and in the obtention of alloys having much less intrinsic defects.

As can be understood, the higher is the temperature, the more expensive will be the process because of the heat energy cost. Thus, it is preferable that the process be carried out at a moderate temperature ranging from about 150°C to about 300°C.

The intensive mechanical grinding can be carried out in a high-energy ball milling machine like those sold under the trademarks SPEX 8000, FRITCH and ZOZ.

If desired, up to 10% by weight of a lubricant can be added to the mixture of powders to be ground. Such lubricant may for example, consisting of carbon, boron nitride or Al₂O₃.

This improved process is particularly well adapted for the preparation of hydrogen absorbing Ni or Mg based alloys.

The Ni-based alloys may be:
a₁) bimetallic alloys made of Ni and one other metal selected from the group consisting of Be, Li, Mg and La; or
a₂) intermetallic alloys made of Ni, at least one other metal selected from the group consisting of Be, Li, Mg and La, and at least one further metal selected from the group of Al, Co, Cu, Fe, Pd, Zn, Ti, V, Cr, Mn, Zr, Nb and Ca.

The process according to the invention can also be used for preparing nanocrystalline alloys of Fe and Ti with possible addition of Mn, or bimetallic alloys of the formula:

(M₁₋ₓAₓ)

wherein:
M is Mg, Be or a combination thereof;
A is at least one element selected from the group consisting of Li, Ca, Ti, V, Cr, Mn, Fe, Co, Ni, Cu, Zn, Al, Y, Zr, Nb, Mo, In, Sn, O, Si, B, C and F; and
x is a number ranging from 0 to 0.3

If desired, when the intensive mechanical grinding has been completed and the requested alloy has been obtained in the form of crystallites having a grain size lower than 100 nm, a given amount of a powder of a hydrogen dissociation catalyst can be added to the crystallites and the resulting mixture can be subjected to an additional grinding so as to apply clusters of the hydrogen dissociation catalyst onto the crystallites. Such catalyst can be, for example, Pd, Pt, Ir or Rh.

As was already explained hereinabove, heating of the metal powder mixture while the same is subjected to intensive mechanical grinding has been found not to affect the nanocrystalline structure of the resulting alloys. It has also been found that this process substantivally reduces the grinding time that is higher than 25 hours and more commonly ranging from 50 to 120 hours, down to less than 10 hours, preferably 8 hours or less and more preferably 5 hours or less. It has further been found that this process substantially reduces the strain and internal defects of the alloys, thereby making them more efficient (well-defined plateau and higher storage capacity).

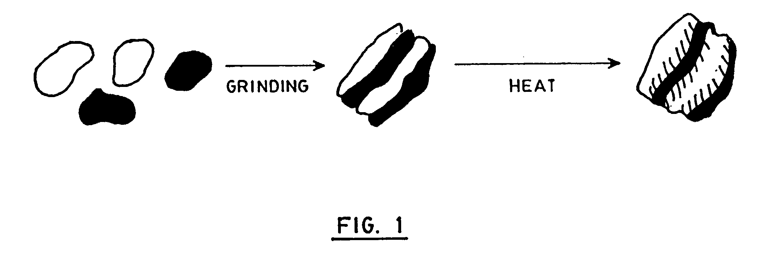

As is shown in Fig. 1, mechanical grinding of powders of different metals (shown in black and white) allows the formation of a layered structure. Simultaneous heating causes an interdiffusion of the metals (shown in dotted lines) and a substantial acceleration in the formation of the resulting alloy.

In order to shown the advantage and efficiency of the process according to the invention, comparative experiments were carried out, using Mg₂Ni as illustrative alloy.

### COMPARATIVE EXAMPLE

7 g of Mg and Ni in a mole ratio of 2:1 were subjected to an intensive mechanical grinding in a high energy ball milling machine SPEX® 8000, having a crucible of 60 ml. Use was made of three steel balls (2 of 7/16" and 1 of 9/16"). The grinding was carried out under a nitrogen atmosphere at ambient pressure and ambient temperature for up to 150 hours. The Mg₂Ni crystallites that were so obtained had a grain size ranging from 10 to 15 nm.

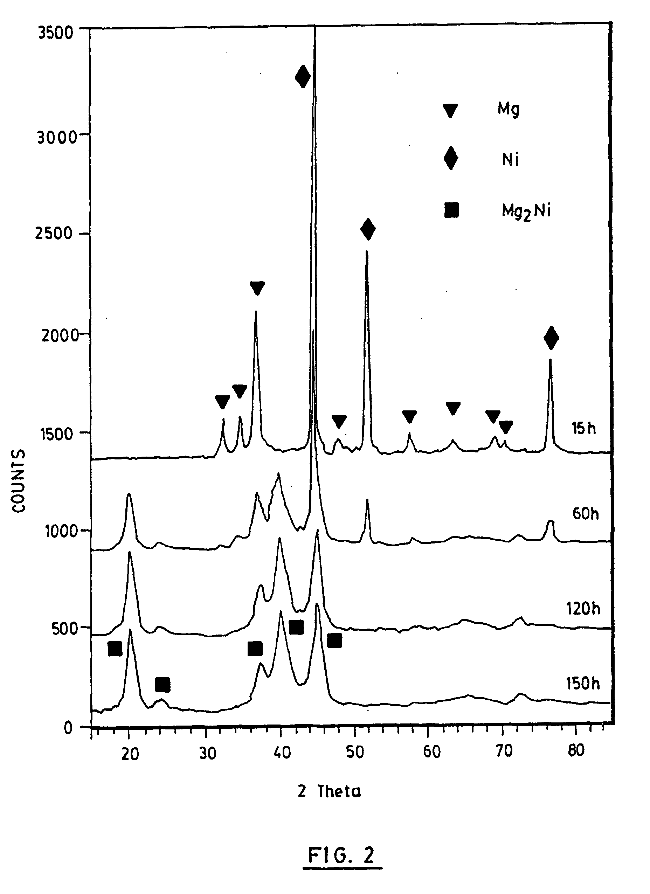

As is shown from the X-ray diffraction spectra given in Fig. 2, Mg₂Ni was formed after 60 hours. After 120 hours, the alloy formation was completed.

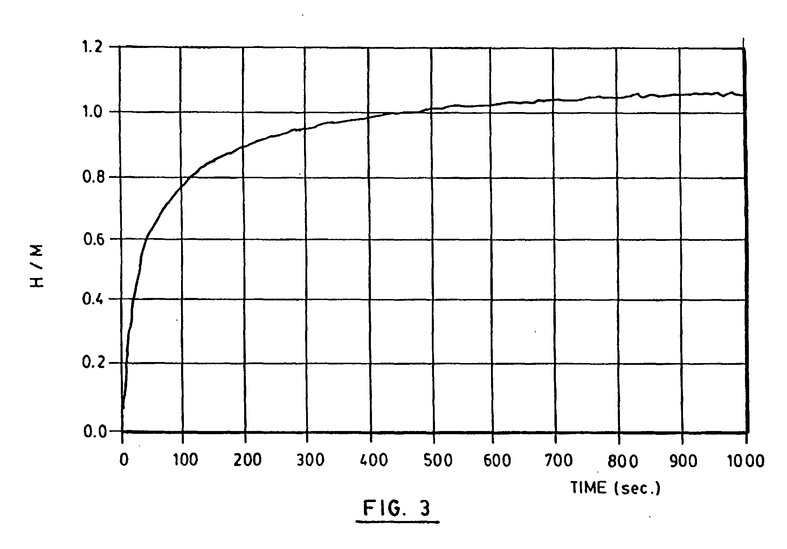

Fig. 3 shows the hydrogen absorption rate of the Mg2Ni alloy that was so prepared, at 12 bars (about 170 PSI) and 300°C.

### EXAMPLE 1

Like in the comparative example disclosed hereinabove, 7 g of Mg and Ni in a mole ratio of 2:1 were subjected to an intensive mechanical grinding in a same high energy ball milling machine SPEX® 8000, using the same kind of crucible and steel balls. The only difference was that the rubber O-ring of the machine was replaced by a copper O-ring and the crucible was heated during the grinding step by means of an electric heating element wound around the crucible.

In this particular example, the grinding was carried out for 5 hours while the heating element was operated. After 5 minutes, the temperature was 150°C. After 10 minutes, it was 240°C. After 30 minutes, the temperature was 270°C and it remained in the range of 290°C for the balance of the process.

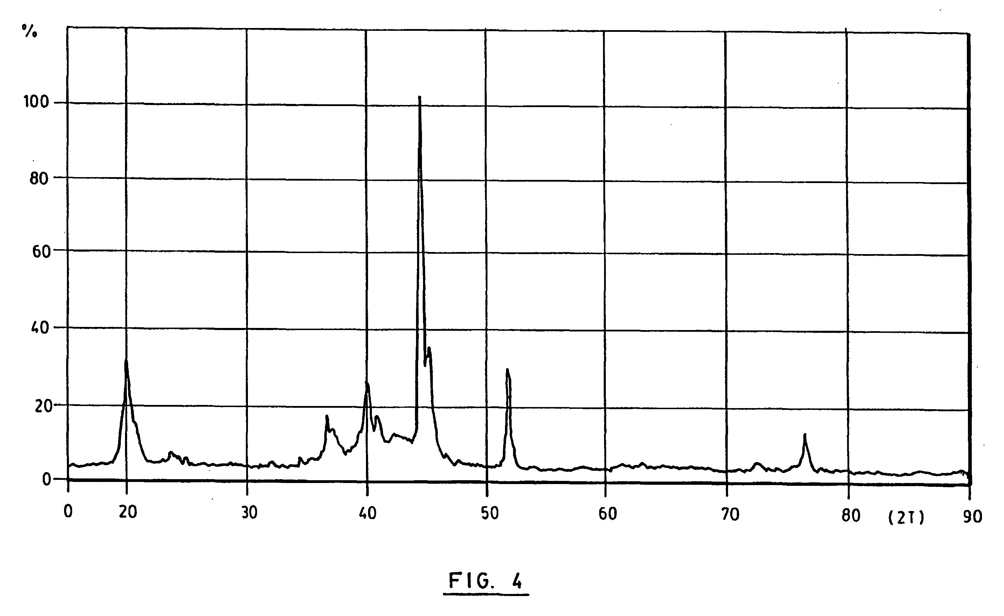

The X-ray diffraction spectrum of the mixture contained in the crucible after 5 hours of grinding at such elevated temperature is shown in Fig 4. As can be seen, this spectrum is almost identical to the one that was obtained after 60 hours of grinding at ambient temperature (see Fig. 2).

The Mg₂Ni crystallites that were so obtained had a grain size of 70 to 80 nm. They were bigger than those obtained at ambient temperature, but they were still nanocrystalline in structure, i.e. lower than 100 nm.

Thus, this example shows-that when the grinding step is carried out at an elevated temperature, a nanocrystalline alloy can be obtained at a speed almost 10 times faster than when the same grinding is carried out at ambient temperature. Moreover, no subsequent annealing is required, since the annealing effect is already achieved during the grinding process.

### EXAMPLE 2

Another sample of nanocrystalline Mg₂Ni alloy was prepared, using the same amounts of metals, the same operative conditions and the same equipments as in example 1.

The only differences with example 1 were that:
- the powder mixture used as starting material contained 5% by weight of carbon as a lubricant; and
- the average grinding temperature was 200°C (instead of 290°C).

The following table gives the crystallite size, the stain and phase abundance after 3 to 8 hours of intensive grinding (milling).

**TABLE 1**

| **Characteristic** | **Phase** | **Milled** **3 hours** | **Milled** **8 hours** |
|---|---|---|---|
| Phase abundance (weight %) | Mg₂Ni | 37% | 97% |
| | Ni | 36% | 3% |
| | Mg | 27% | -- |
| Crystallite size (nm) | Mg₂Ni | 126 | 50 |
| | Ni | 58 | 27 |
| | Mg | 171 | -- |
| Strain (%) | Mg₂Ni | 0.8 | |
| | Ni | 1.0 | |
| | Mg | 1.0 | |

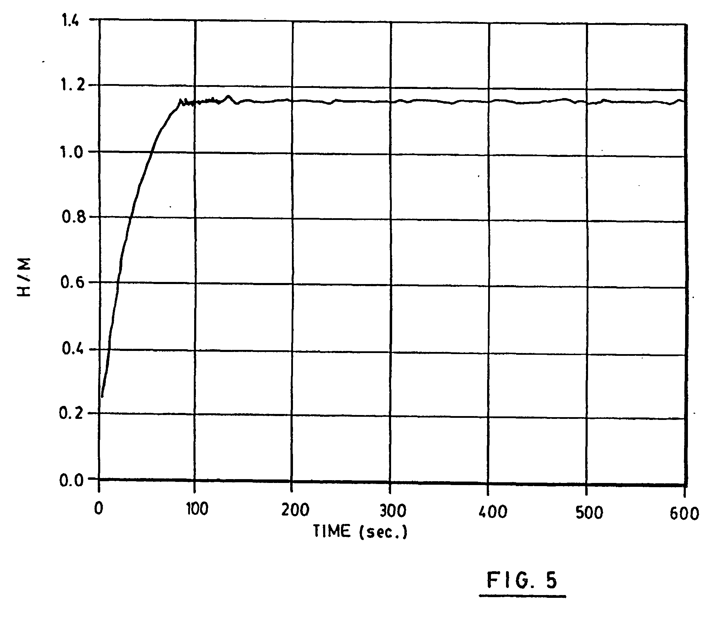

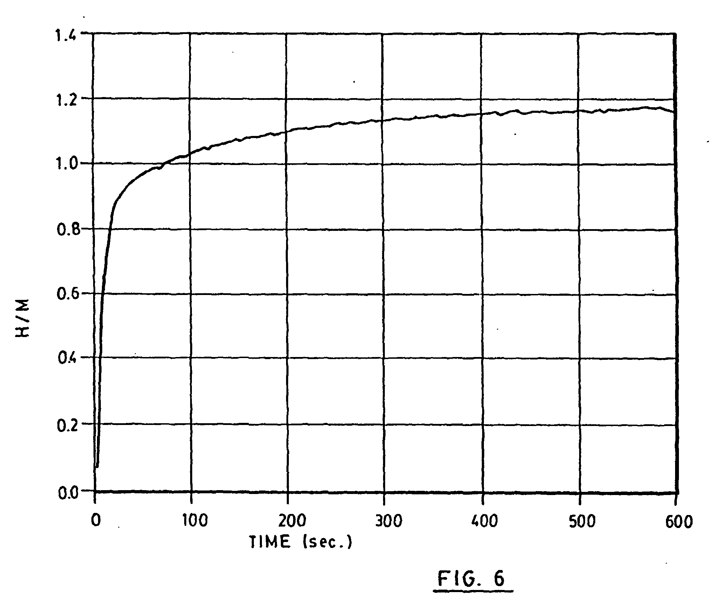

Figs. 5 and 6 show the hydrogen absorption rates of the Mg₂Ni alloy that was obtained after 8 hours of milling at 200°C, after 3 and 4 absorptions, respectively. Such rates were measured at a pressure of 12 bars and a temperature of 300°C for Fig. 5, and 200°C for Fig. 6. Thus, the rate reported in Fig. 5 was obtained under the same conditions as used in the comparative example (see Fig. 3).

As can be seen, the absorption rate of the alloy prepared by milling in accordance with the invention, *viz.* at elevated temperature, is substantially faster than the absorption rate of the alloy prepared by milling at ambient temperature.

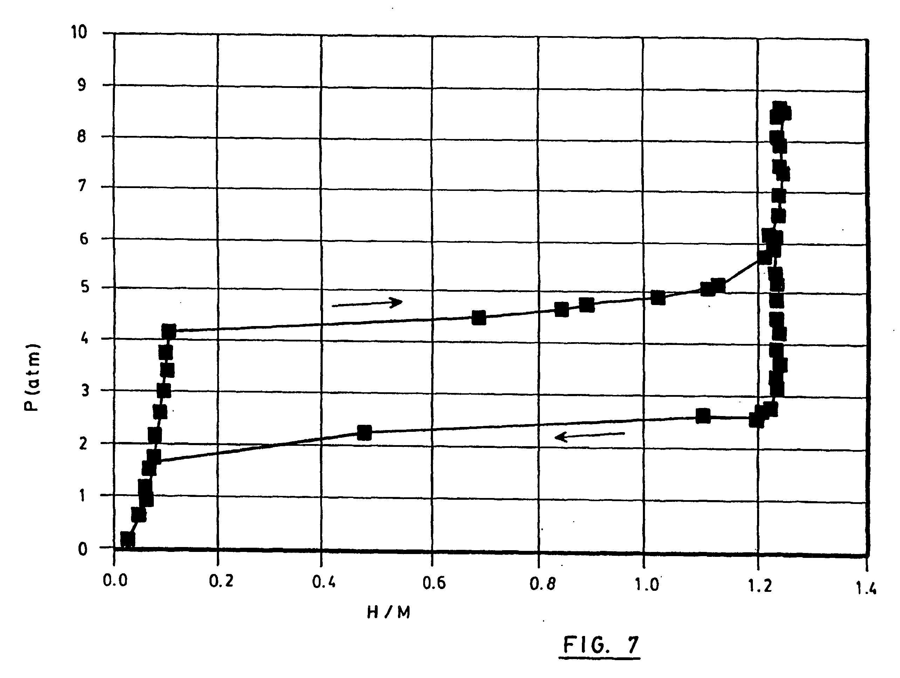

Fig. 7 is a curve showing the pressure-composition isotherm obtained with the above alloy milled for 8 hours at 200°C. As can be seen, this curve clearly shows the formation of a plateau both for absorption and desorption, like those that are obtained by subsequent annealing of a nanocrystalline alloy obtained by intensive mechanical grinding at ambient temperature (see, by way of comparison, Fig. 2 of the above mentioned article of L. ZALUSKI et al, Journal of Alloys and Compounds, 222 (1995) 53-57. Thus, the process according to the invention permits not only to prepare the hydrogen absorbing nanocrystalline alloy but simultaneously also to activate the same.

Of course, numerous modifications could be made as to the way of reducing to practice this invention depending on the kind of alloy to be prepared and the characteristics such alloy should have. Such modifications are obvious for one skilled in the art and would not depart from the scope of the appended claims.

## Claims

1. A process for preparing a nanocrystalline powder of an alloy made of at least two metals, said nanocrystalline powder consisting of crystallites having a grain size lower than 100 nm, said process comprising the step of subjecting to an intensive mechanical grinding a powder of one of said at least two metals with a powder of every other one of said at least two metals in such amounts as to obtain the requested alloy, said intensive metal grinding being carried out at atmospheric pressure under an inert atmosphere and for a period of time sufficient to achieve formation of said crystallites and reduction of the grain size of said crystallites to the requested value,
**characterized in that** said intensive mechanical grinding is carried out at an elevated temperature ranging from about 100°C to about 400°C, whereby a substantial reduction of said period of time by about one order of magnitude is achieved when compared to a mechanical grinding step carried at ambient temperature.

2. The process of claim 1, **characterized in** said elevated temperature ranges from about 150°C to about 300°C.

3. The process of claim 1 or 2, **characterized in that** the alloy is selected from the group consisting of:
a) alloys made of Ni and of at least one other metal;
b) alloys made of Mg and at least one other metal;
c) alloys made of Fe and Ti;
d) alloys made of Fe, Ti and Mn.

4. The process of claim 1 or 2, **characterized in that** the alloy is a hydrogen absorbing alloy selected from the group consisting of:
a₁) bimetallic alloys made of Ni and one other metal selected from the group consisting of Be, Li, Mg and La;
a2) intermetallic alloys made of Ni, at least one other metal selected from the group consisting of Be, Li, Mg and La, and at least one further metal selected from the group of Al, Co, Cu, Fe, Pd, Zn, Ti, V, Cr, Mn, Zr, Nb and Ca;
b1) bimetallic alloys of the formula:
(M₁₋ₓAₓ)
wherein:
M is Mg, Be or a combination thereof;
A is at least one element selected from the group consisting of Li, Ca, Ti, V, Cr, Mn, Fe, Co, Ni, Cu, Zn, Al, Y, Zr, Nb, Mo, In, Sn, O, Si, B, C and F;
x is a number ranging from 0 to 0.3;
c₁) bimetallic alloy made of Fe and Ti; and
d₁) trimetallic alloy made of Fe, Ti and Mn.

5. The process of claim 4, **characterized in that** said alloy is Mg₂Ni.

6. The process of claim 4 or 5, **characterized in that** when the intensive mechanical grinding is completed and the requested alloy is obtained in the form of crystallites having a grain size lower than 100 nm, a given amount of a powder of a hydrogen dissociation catalyst material is added to said crystallites and the resulting mixture is subjected to an additional grinding so as to apply clusters of said catalyst material onto said crystallites.

7. The process of claim 6, **characterized in that** said catalyst material is selected from the group consisting of Pd, Pt, Ir and Rh.

8. The process of any one of claims 1 to 7, **characterized in that** said intensive mechanical grinding is carried out in a high-energy ball milling machine in the presence of lubricant.

9. The process of claim 8, **characterized in that** the lubricant is selected from the group consisting of graphite, boron nitride and Al₂O₃.

10. The process of claim 9, **characterized in that** the lubricant is graphite.

11. The process of any one of claims 1 to 10, **characterized in that** the period of time is equal to or lower than 8 hours.

12. The process of claim 11, **characterized in that** the period of time is equal to or lower than 5 hours.

## Patentansprüche

1. Verfahren zur Herstellung eines nanokristallinen Pulvers aus einer Legierung, hergestellt aus mindestens zwei Metallen, wobei das nanokristalline Pulver aus Kristalliten mit einer Korngröße unterhalb von 100 nm besteht, wobei das Verfahren den Schritt des Unterwerfens eines Pulvers der mindestens zwei Metall mit einem Pulver des jeweils anderen der mindestens zwei Metalle in solchen Mengen unter eine intensive mechanische Zermahlung umfasst, um die gewünschte Legierung zu erhalten, wobei die intensive Metallzermahlung bei atmosphärischem Druck unter einer Inertatmosphäre und für eine ausreichende Zeit zum Erzielen der Bildung dieser Kristalliten und der Verringerung der Korngröße der Kristalliten auf die gewünschten Werte durchgeführt wird,
**dadurch gekennzeichnet, dass** die intensive mechanische Zermahlung bei einer erhöhten Temperatur im Bereich von etwa 100 °C bis etwa 400 °C durchgeführt wird, wodurch eine wesentliche Verringerung der Zeitspanne um etwa eine Größenordnung erzielt wird, im Vergleich zu einem bei Raumtemperatur durchgeführten mechanischen Zermahlungsschritt.

2. Verfahren gemäß Anspruch 1, **dadurch gekennzeichnet, dass** die erhöhte Temperatur von etwa 150 °C bis etwa 300 °C reicht.

3. Verfahren gemäß Anspruch 1 oder 2, **dadurch gekennzeichnet, dass** die Legierung ausgewählt ist aus der Gruppe, bestehend aus:
a) Legierungen aus Ni und mindestens einem anderen Metall;
b) Legierungen aus Mg und mindestens einem anderen Metall;
c) Legierungen aus Fe und Ti;
d) Legierungen aus Fe, Ti und Mn.

4. Verfahren gemäß Anspruch 1 oder 2, **dadurch gekennzeichnet, dass** die Legierung eine Wasserstoff absorbierende Legierung ist, ausgewählt aus der Gruppe, bestehend aus:
a₁) bimetallischen Legierungen aus Ni und einem anderen Metall, ausgewählt aus der Gruppe, bestehend aus Be, Li, Mg und La;
a₂) intermetallischen Legierungen aus Ni, mindestens einem anderen Metall, ausgewählt aus der Gruppe, bestehend aus Be, Li, Mg und La, und mindestens einem weiteren Metall, ausgewählt aus der Gruppe von Al, Co, Cu, Fe, Pd, Zn, Ti, V, Cr, Mn, Zr, Nb und Ca;
b₁) bimetallischen Legierungen der Formel:
(M₁₋ₓAₓ)
worin:
M Mg, Be oder eine Kombination derselben ist;
A mindestens ein Element ist, ausgewählt aus der Gruppe, bestehend aus Li, Ca, Ti, V, Cr, Mn, Fe, Co, Ni, Cu, Zn, Al, Y, Zr, Nb, Mo, In, Sn, O, Si, B, C und F;
x eine Zahl im Bereich von 0 bis 0,3 ist;
c₁) einer bimetallischen Legierung aus Fe und Ti; und
d₁) einer trimetallischen Legierung aus Fe, Ti und Mn.

5. Verfahren gemäß Anspruch 4, **dadurch gekennzeichnet, dass** die Legierung Mg₂Ni ist.

6. Verfahren gemäß Anspruch 4 oder 5, **dadurch gekennzeichnet, dass** dann, wenn das intensive mechanische Zermahlen abgeschlossen und die gewünschte Legierung in Form von Kristalliten mit einer Korngröße unterhalb von 100 nm erhalten ist, eine vorgegebene Menge eines Pulvers eines Wasserstoff-Dissoziations-Katalysatormaterials zu den Kristalliten zugesetzt wird und die resultierende Mischung einem zusätzlichen Zermahlen unterworfen wird, um Cluster des Katalysatormaterials auf die Kristalliten aufzutragen.

7. Verfahren gemäß Anspruch 6, **dadurch gekennzeichnet, dass** das Katalysatormaterial ausgewählt ist aus der Gruppe, bestehend aus Pd, Pt, Ir und Rh.

8. Verfahren gemäß einem der Ansprüche 1 bis 7, **dadurch gekennzeichnet, dass** das intensive mechanische Zermahlen in einer Hochenergiekugelmühle in Anwesenheit von Gleitmittel durchgerührt wird.

9. Verfahren gemäß Anspruch 8, **dadurch gekennzeichnet, dass** das Gleitmittel ausgewählt ist aus der Gruppe, bestehend aus Graphit, Bornitrid und Al₂O₃.

10. Verfahren gemäß Anspruch 9, **dadurch gekennzeichnet, dass** das Gleitmittel Graphit ist.

11. Verfahren gemäß einem der Ansprüche 1 bis 10, **dadurch gekennzeichnet, dass** die Zeitspanne gleich oder kleiner als 8 Stunden ist.

12. Verfahren gemäß Anspruch 11, **dadurch gekennzeichnet, dass** die Zeitspanne gleich oder kleiner als 5 Stunden ist.

## Revendications

1. Un procédé pour préparer une poudre nanocrystalline d'un alliage fait d'au moins deux métaux, ladite poudre nanocrystalline consistant en des cristallites ayant une taille de grains inférieure à 100 nm, ledit procédé comprenant l'étape consistant à soumettre une poudre d'un au moins des deux métaux à un broyage mécanique intense avec une poudre de chacun des autres desdits métaux en quantité choisie pour obtenir l'alliage requis, ledit broyage mécanique intense étant effectué à pression atmosphérique sous une atmosphère inerte et pour une période de temps suffisante pour obtenir la formation desdits cristallites et réduire la taille desdits cristallites à la valeur requise,
**caractérisé en ce que** ledit broyage mécanique intense est effectué à une température élevée comprise entre environ 100°C et environ 400°C, grâce à quoi une réduction substantielle de ladite période de temps d'environ un ordre de grandeur est obtenu si on la compare à celle où l'étape de broyage mécanique effectué à température ambiante.

2. Le procédé de la revendication 1, **caractérisé en ce que** ladite température élevée est comprise entre environ150°C et environ 300°C,

3. Le procédé de la revendication 1 ou 2, **caractérisé en ce que** l'alliage est choisi dans le groupe constitué par :
a) les alliages faits de Ni et d'au moins un autre métal;
b) les alliages faits de Mg et au moins un autre métal;
c) les alliages faits de Fe et Ti;
d) les alliages faits de Fe, Ti et Mn.

4. Le procédé de la revendication 1 ou 2, **caractérisé en ce que** l'alliage est un alliage absorbant d'hydrogène choisi dans le groupe constitué par :
a₁) les alliages bimétalliques faits de Ni et d'au moins un autre métal choisi dans le groupe constitué par Be, Li, Mg et La;
a₂) les alliages intermétalliques faits de Ni, au moins un autre métal choisi dans le groupe constitué par Be, Li, Mg et La, et au moins encore un autre métal choisi dans le groupe constitué de Al, Co, Cu, Fe, Pd, Zn, Ti, V, Cr, Mn, Zr, Nb et Ca;
b₁) les alliages bimétalliques de formule :
(M₁₋ₓAₓ)
dans lequel :
M est Mg, Be ou une combinaison des deux;
A est au moins un élément choisi dans le groupe constitué par Li, Ca, Ti, V, Cr, Mn, Fe, Co, Ni, Cu, Zn, Al, Y, Zr, Nb, Mo, In, Sn, O, Si, B, C et F;
x est un nombre compris entre 0 et 0.3;
c₁) l'alliage bimétallique fait de Fe et Ti; et
d₁) l'alliage trimétallique fait de Fe, Ti et Mn.

5. Le procédé de la revendication 4, **caractérisé en ce que** ledit alliage est Mg₂Ni.

6. Le procédé de la revendication 4 ou 5, **caractérisé en ce que** lorsque le broyage mécanique est terminé et l'alliage requis est obtenu sous la forme de cristallites ayant une taille de grains inférieure à 100 nm, une quantité donnée d'une poudre d'un matériau catalyseur de dissociation d'hydrogène est ajouté auxdits cristallites et le mélange résultant est soumis à un broyage additionnel de façon à appliquer des agrégats dudit matériau catalyseur sur lesdits cristallites.

7. Le procédé de la revendication 6, **caractérisé en ce que** ledit matériau catalyseur est choisi dans le groupe constitué par Pd, Pt, Ir et Rh.

8. Le procédé de l'une quelconque des revendications 1 à 7, **caractérisé en ce que** ledit broyage mécanique intense est effectué dans une machine de broyage à billes à haute énergie en présence d'un lubrifiant.

9. Le procédé de la revendication 8 **caractérisé en ce que** le lubrifiant est choisi dans le groupe constitué par le graphite, le nitrure de bore et Al₂O₃.

10. Le procédé de la revendication 9, **caractérisé en ce que** le lubrifiant est du graphite.

11. Le procédé selon l'une quelconque des revendications 1 à 10, **caractérisé en ce que** la période de temps est égale ou inférieure à 8 heures.

12. Le procédé de la revendication 11, **caractérisé en ce que** la période de temps est égale ou inférieure à 5 heures.
